Europäisches Patentamt

(19) European Patent Office

Office européen des brevets

(11) Numéro de publication: **0 124 386**
**B1**

(12) **FASCICULE DE BREVET EUROPEEN**

(45) Date de publication du fascicule du brevet: **11.05.88**

(51) Int. Cl.⁴: **G 09 F 9/37**

(21) Numéro de dépôt: **84400501.7**

(22) Date de dépôt: **13.03.84**

(54) Dispositif indicateur à commande électrique de déplacement d'un fluide.

(30) Priorité: **23.03.83 FR 8304745**

(43) Date de publication de la demande:
**07.11.84 Bulletin 84/45**

(45) Mention de la délivrance du brevet:
**11.05.88 Bulletin 88/19**

(84) Etats contractants désignés:
**DE GB IT NL SE**

(56) Documents cités:

**XEROX DISCLOSURE JOURNAL, vol. 4, no. 3, mai/juin 1979, pages 385-386, New York, US; N.K. SHERIDON: "Electrocapillary imaging devices for display and data storage"**

**IBM TECHNICAL DISCLOSURE BULLETIN, vol. 22, no. 1, juin 1979, page 325, New York, US; N.H. RUNYAN: "Electrostatic liquid display devices"**

(73) Titulaire: **THOMSON-CSF
173, Boulevard Haussmann
F-75379 Paris Cédex 08 (FR)**

(72) Inventeur: **Le Pesant, Jean-Pierre
THOMSON-CSF SCPI 173, bld Haussmann
F-75379 Paris Cedex 08 (FR)**

(74) Mandataire: **Lepercque, Jean et al
THOMSON-CSF SCPI 19, avenue de Messine
F-75008 Paris (FR)**

Courier Press, Leamington Spa, England.

## Description

La présente invention se rapporte aux dispositifs permettant l'emmagasinage et la visualisation de données numériques au moyen d'index fluides que l'on fait évoluer dans un espace capillaire délimité par deux plaques de confinement. Le fluide constituant les index partage le volume de l'espace capillaire avec un second fluide non miscible avec le premier, afin d'assurer un fractionnement durable en deux phases. La lame fluide hétérogène pincée entre les deux plaques de confinement est donc formée d'une phase globulaire bordée latéralement par une phase lacunaire. Le volume de chaque globule est tel qu'il soit pincé par les plaques de confinement. Ainsi, ce globule constitue un index à deux degrés de liberté susceptible d'évoluer dans l'étendue de l'espace capillaire, de se fixer en y créant des plages de capture et d'interagir avec d'autres globules jouant le rôle de réserve de fluide.

Les dispositifs à déplacement de fluide ne comportant pas la mise en oeuvre d'organes mécaniques tels que pistons, pompes, turbines, etc... sont généralement basés sur la modification des propriétés physicochimiques des fluides à déplacer. On peut envisager la mise en oeuvre de moyens tels que thermosyphon, convecteurs, évaporateurs, circulateurs basés sur l'électroconvection ou la magnétohydrodynamique. L'inconvénient de ces moyens est de nécessiter une dépense d'énergie relativement importante, car il s'agit selon les cas de faire circuler un courant électrique, de créer un champ magnétique, de produire une dilatation ou une contraction thermique ou électrique, de produire un changement de phase de la matière, etc....

Le problème posé par le déplacement d'un fluide au moyen d'une commande électrique, sans passer par la mise en oeuvre d'organes mécaniques et avec une faible consommation d'énergie suppose que l'on puisse créer une force motrice suffisante pour vaincre des forces autres que les forces de gravité.

En effet, un dispositif indicateur à déplacement de fluide doit pourvoir fonctionner correctement dans toutes les positions et supporter sans inconvénient des accélérations. Donc, le maintien en position du fluide doit dépendre de forces vis-à-vis desquelles on peut négliger les forces d'inertie et ces forces doivent être vaincues par une force d'origine électrique limitant au strict minimum la dépense d'énergie.

Le document IBM Technical Disclosure Bulletin, volume 22, numéro 1, juin 1979 décrit un dispositif permettant de déplacer un fluide diélectrique à l'aide d'un champ électrique.

La présente invention se propose d'utiliser les forces de tension superficielles, les forces de tension interfaciales et les forces dûes à la polarisation électrique d'un fluide diélectrique pour réaliser un dispositif d'affichage. Les forces de tension superficielle assurent le maintien en position de faibles quantités de fluide évoluant dans un espace capillaire de faible hauteur, car les forces gravitionnelles deviennent négligeables par rapport aux forces de capillarité. Les forces engendrées par la polarisation d'un diélectrique deviennent importantes lorsque le gradient de champ électrique est intense, ce qui est aisé à obtenir avec une tension électrique appliquée à des électrodes rapprochées. Cette technique ne nécessite pas le passage d'un courant électrique dans le fluide ni avant, ni pendant, ni après son déplacement.

L'invention a pour objet un dispositif de commande électrique de déplacement d'un fluide où celui-ci joue le rôle d'index matériel comportant deux plaques de confinement délimitant un espace capillaire dont le volume est partagé par au moins deux fluides non-miscibles de permittivités diélectriques distinctes; l'un desdits fluides ayant une structure globulaire noyée dans la structure lacunaire de l'autre desdits fluides; lesdites plaques étant munies de moyens inducteurs d'un gradient de champ électrique faisant converger le fluide ayant la plus forte permittivité vers les régions de l'espace capilaire soumises audit champ électrique, lesdits moyens inducteurs comprenant un générateur électrique relié à plusieurs couples d'électrodes disposés selon les faces en vis-à-vis desdites plaques de confinement, caractérisé en ce qu'il comporte:

— au moins une région réservoir délimitée par des couples d'électrodes et contenant une réserve de fluide;

— des couples d'électrodes de rétrécissement situés à proximité d'un couple d'électrodes de la région réservoir et ayant une morphologie constituant un rétrécissement permettant de former par convergence du fluide la striction de son volume en vue de la fractionner; lesdits couples d'électrodes coopérant avec ledit générateur électrique pour fractionner ledit volume et extraire de la région réservoir une fraction calibrée de volume de fluide.

L'invention sera mieux comprise au moyen de la description ci-après et des figures annexées parmi lesquelles:

Les figures 1 et 2 sont des figures explicatives de dispositifs à déplacement de fluide selon l'art connu.

La figure 3 est une vue isométrique d'un dispositif indicateur selon l'art connu.

Les figures 4 et 5 sont des figures explicatives de dispositifs selon l'art connu.

La figure 6 est une vue isométrique d'un dispositif indicateur selon l'invention.

La figure 7 est un exemple de réalisation selon l'invention.

La figure 8 représente une configuration d'électrodes intercalées.

La figure 9 est une vue partielle en coupe d'une variante de réalisation du dispositif selon l'invention.

Dans la description qui va suivre, la commande électrique de déplacement d'un fluide permet d'organiser dans un escape capillaire enserré entre deux plaques un cheminement d'index matériels issus du fractionnement d'une masse fluide. Des données numériques peuvent ainsi être matérialisées par un ou plusieurs globules fluides selon les positions qu'ils occupent dans l'étendue l'espace capillaire. Le

2

**0 124 386**

déplacement d'un globule entre deux positions sous le couvert d'une commande électrique de type tout ou rien permet de réaliser une fonction de mémoire binaire. Le jeu des forces de tension superficielles peut suffice à assurer le maintien en place d'un globule après qu'il ait été déplacé électriquement. A condition que l'une au moins des plaques de confinement soit perméable à la lumière, l'état mémoire est visualisable et le dispositif réalisé sur cette base devient un dispositif indicateur. En procédant à des déplacements pas à pas d'un globule, on peut réaliser une fonction de registre à décalage, mais on peut encore faire en sorte qu'un globule se détache d'une masse fluide ou aille la rejoindre ultérieurement, ce qui revient à créer l'index matériel ou à l'anihiler. Grâce à ces diverses possibilités de déplacement, de fractionnement et de regroupement de globules fluides, il est aisé de mettre en mémoire ou de visualiser des blocs de données numériques binaires. La détection de présence d'un globule par l'une de ses caractéristiques physiques peut fournir des signaux électriques typiques de la lecture d'une mémoire. Cette détection peut être avantageusement basée sur la variation de capacité électrique résultant des permittivités différenciées des fluides en présence. Le rassemblement de plusieurs globules permet une visualisation point par point de tout caractère d'écriture ou graphisme.

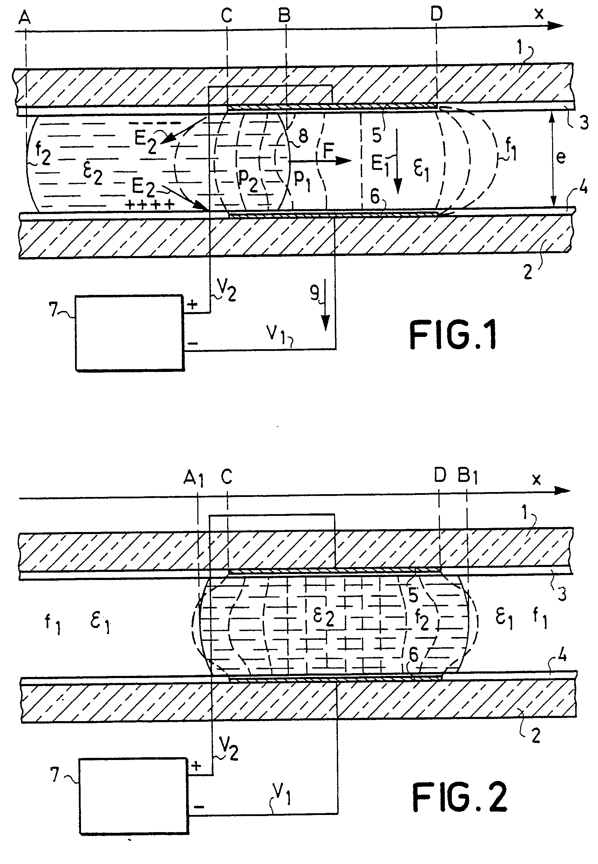

Selon l'art connu un dispositif à commande électrique de déplacement d'un fluide, tel que celui de la figure 1, comporte un espace capillaire de hauteur e où l'on fait cohabiter deux fluides diélectriques non-miscibles. L'espace capillaire est délimité par deux plaques rigides de confinement 1 et 2 par exemple en verre. La hauteur e est choisie égale ou inférieure au millimètre, afin que les phénomènes de capillarité prennent le pas sur les forces gravitationnelles. Les faces internes des plaques 1 et 2 ont subi une préparation qui consiste en des nettoyages appropriés et des dépôts de surface 3 et 4 qui doivent éviter la formation de films capillaires par le ou les liquides dont on souhaite contrôler électriquement le déplacement. A titre d'exemple non limitatif, l'espace capillaire situé entre les dépôts 3 et 4 est occupé par un fluide gazeux ou une vapeur $f_1$ de permittivité diélectrique $\varepsilon_1$. Dans une partie du volume de l'espace capillaire, un second fluide liquide $f_2$ est introduit. Le second fluide $f_2$ dispose d'une permittivité diélectrique $\varepsilon_2$ supérieure à $\varepsilon_1$ et il prend la forme d'un globule qui s'étend par exemple entre les abscisses A et B. Pour réaliser électriquement le déplacement du globule $f_2$ dans la direction positive de l'axe x, l'invention prévoit de munir les faces internes des plaques 1 et 2 d'un couple d'électrodes 5 et 6 qui sont recouvertes notamment par les dépôts 3 et 4. Ces électrodes 5 et 6 qui occupent une région située entre les abscisses décalées CD sont reliées à un générateur électrique 7 qui délivre des potentiels $V_2$ et $V_1$ dont la différence produit des forces volumiques qui raportées à l'interface 8 équivalent à une force motionnelle F.

L'origine physique de la force motionnelle F s'explique par la présence au sein des milieux matériels de charges électriques positives et négatives qui peuvent être libres ou liées. En présence d'un champ électrique inducteur $\vec{E}_o$, les charges libres peuvent se déplacer dans l'ensemble du volume de matière soumis au champ électrique, ce qui constitue le phénomène de conduction électrique. Ce phénomène n'est pas exploité dans le cadre de la présente invention bien qu'une faible conductivité des fluides utilisés puisse être acceptée. Par contre, les charges électriques liées aux atomes et molécules donnent naissance à des moments dipolaires électriques. Le milieu matériel réagit au champ électrique inducteur $\vec{E}_o$ par une polarisation électrique $\vec{P}$ qui est la somme sur le volume soumis au champ des moments dipolaires induits et de ceux qui préexistent du fait des symétries particulières des molécules.

Ce comportement diélectrique s'exprime par la relation vectorielle $\vec{E}=\vec{E}_o+\vec{E}'$ ou $\vec{E}'$ est le champ électrique dû à la polarisation $\vec{P}$ et $\vec{E}$ le champ électrique résultant dans le milieu matériel.

Le comportement diélectrique d'un milieu matériel est donné par une relation tensorielle qui s'écrit $P_u=X_{uv}E^v$ où $X_{uv}$ est le tenseur de susceptibilité électrique. Pour un milieu diélectrique isotrope, on dispose d'une relation plus simple qui est $\vec{P}=(\varepsilon-\varepsilon_o)\vec{E}$ où $\varepsilon_o$ est la permittivité du vide et $\varepsilon$ celle du diélectrique. Dans ce cas, la force $\vec{F}$ qui s'exerce sur un milieu de volume v soumis au champ $\vec{E}_o$ s'exprime par:

$$\vec{F}= \int_v (\vec{P} \cdot \overrightarrow{grad})\vec{E}_o dv. \qquad (1)$$

Cette force est volumique et d'autant plus grande que la polarisation est forte et que le gradient de champ est important.

L'application de cette relation à des milieux hétérogènes soumis à des champs électriques non-uniformes permet de dégager une force de déplacement d'origine volumique capable de vaincre des forces de rappel telles que les forces de tension superficielle.

Plus précisément, pour obtenir le fonctionnement du dispositif de la figure 1, on choisit les fluides $f_1$ et $f_2$ de telle façon que la polarisation électrique résultante dans le fluide $f_2$ soit supérieure à celle du fluide $f_1$. Ainsi la force $\vec{F}_2$ calculée par la relation (1) pour le fluide $f_2$ dépasse en module la force $\vec{F}_1$ calculée par la même relation pour le fluide $f_1$. Ceci entraîne sur la surface de séparation 8 des deux fluides une surpression $p_2$ du côté de $f_2$ supérieure à la surpression $p_1$ du côté de $f_1$. Tout se passe comme si une force motionnelle F agissait sur la surface de séparation 8. A condition que les forces s'opposant au mouvement, c'est-à-dire les forces de capillarité, de tension superficielle et interfaciale et de viscosité soient vaincues, le fluide $f_2$ chasse le fluide $f_1$ pour occuper la portion de volume située entre les électrodes 5 et 6. Ce travail correspond à la fourniture d'énergie électrique par le générateur 7 qui débite une quantité d'électricité q sous une différence de potentiel $V_2-V_1$ car la capacité électrique du condensateur formé par les électrodes 5 et 6 a augmenté, alors qu'on maintenait constante la différence de potentiel entre ses armatures. Pour rendre plus clair le fonctionnement qui consiste en l'spiration électrostatique du globule $f_2$ dans l'espace

3

interélectrodes, on a tracé en pointillé sur la figure 1 les lignes de champ électrique avec les vecteurs champ électriques $E_1$ et $E_2$ et les charges liées + et − engendrées par la polarisation du fluide $f_2$.

La figure 2 représente l'état final. On voit que le globule $f_2$ est venu occuper la région délimitée par les abscisses $A_1$ et $B_1$ qui s'étend symétriquement par rapport à la région CD garnie d'électrodes. Le globule déplacé dans la région $A_1B_1$ peut rester captif du fait du maintien d'une différence de potentiel $V_2-V_1$.

Cependant, l'invention prévoit que la suppression de la différence de potentiel laissera subsister une force de rappel maintenant le globule captif de la zone interélectrodes. En effet, les dépôts 3 et 4 sont suffisamment minces pour que les forces moléculaires agissent entre la matière des électrodes 5 et 6 et le fluide $f_2$ en vue de la fixer à l'emplacement illustré sur la figure 2. Le générateur 7 est impuissant à déloger le globule $f_2$ de la zone de capture où il est venu se placer.

On peut prévoir également la réversibilité du déclenchement d'un globule grâce à des dispositions particulières.

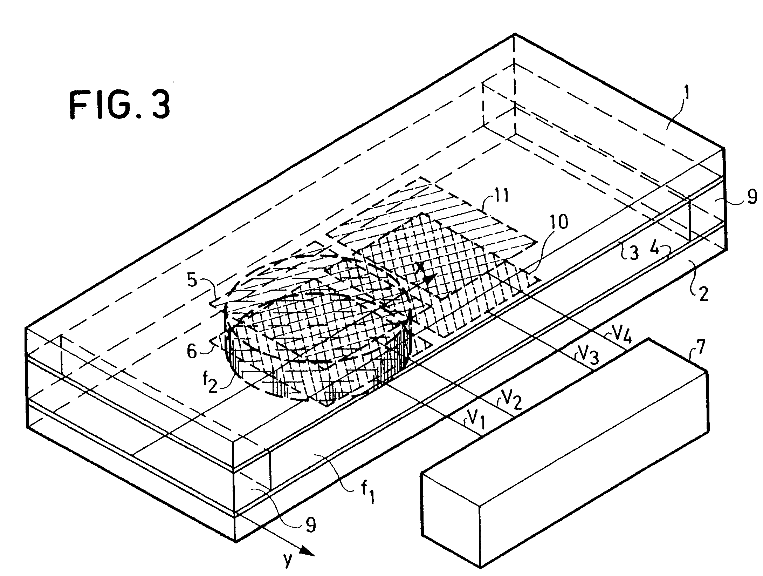

Sur la figure 3, on peut voir une vue isométrique d'un dispositif à commande électrique de déplacement selon l'art connu. Les mêmes références désignent les mêmes éléments que sur les figures 1 et 2. Les plaques 1 et 2 sont reliées par des entretoises 9 et l'on aperçoit un deuxième couple d'électrodes 10 et 11 faisant suite dans la direction de l'axe x au couple d'électrodes 5 et 6. Le générateur électrique 7 fournit des potentiels $V_3$ et $V_4$ aux électrodes 10 et 11.

La figure 3 montre en pointillé le contour circulaire d'un globule de fluide $f_2$ susceptible de se mouvoir dans l'étendue du plan xy. Les électrodes 5, 6, 10 et 11 ont par exemple une forme carrée de 100 microns de côté. Les entretoises 9 ont une hauteur de 10 à 20 µm et l'intervalle séparant l'électrode 5 de l'électrode 11 est égal à 20 µm. Le fluide $f_1$ qui entoure le globule $f_2$ est de l'air et le fluide $f_2$ est choisi parmi les hydrocarbures tels que des alcanes de $C_5$ à $C_{25}$, des cétones (acétone, cyclohexanone, méthyléthylcétone) ou des dérivés nitrés (nitrobenzène, nitrotoluène). Le générateur électrique 7 peut fournir des différences de potentiel $V_2-V_1$ et $V_4-V_3$ de l'ordre de 100 à 300 volts pour créer des champs électriques de déplacement de l'ordre de $5.10^6$ à $3.10^7$ volts par mètre. Le volume du globule de fluide $f_2$ pincé entre les plaques 1 et 2 est calibré de manière à déborder légèrement le contour des électrodes 5 et 6, mais il pourrait également être augmenté pour empiéter sur le couple d'électrodes 10 et 11.

Poure faire passer le globule $f_2$ de l'espace interélectrode 5, 6 à l'espace interélectrode 10, 11, on annule ou on diminue la différence de potentiel $V_2-V_1$ et l'on établit la différence de potentiel $V_4-V_3$. On réalise ainsi un pas de progression dans la direction positive de l'axe x. Pour faire revenir le globule index à sa position d'origine, il faut annuler ou réduire la différence de potentiel $V_4-V_3$ et rétablir la différence de potentiel $V_2-V_1$. Si les deux différences de potentiel sont appliquées en même temps, le globule ne tend pas à se déplacer, mais s'il déborde un jeu d'électrodes il peut se déformer pour tenter d'épouser le mieux possible la somme des étendues des électrodes 5 et 11.

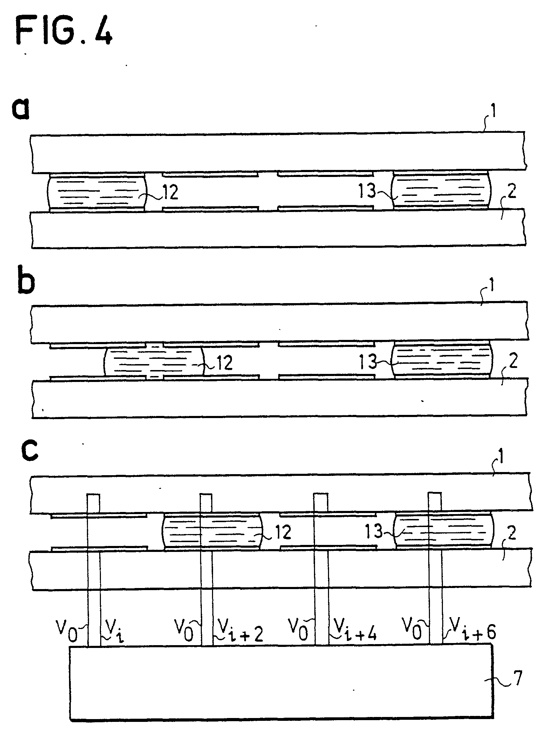

Le mode de fonctionnement illustré sur la figure 3 peut se généraliser comme illustré en (a), (b) et (c) sur la figure 4 où l'on a prévu sur les plaques 1 et 2 quatre couples d'électrodes qui peuvent former des alignements suivant les axes x ou y du plan dans lequel on fait évoluer des globules 12 et 13. La situation illustrée en (a) est telle que deux globules 12 et 13 sont captifs des couples d'électrodes extérieurs. Pour déplacer le globule 12 vers la droite comme illustré en (c) sur la figure 4, on crée une différence de potentiel $V_{i+2}-V_o$ et on annule ou un réduit la différence de potentiel $V_i-V_o$. En (b), sur la figure 4, le globule 12 a accompli la moitié du saut et il peut occuper n'importe quelle position entre les deux couples d'électrodes de gauche lorsque les différences de potentiel $V_i-V_o$ et $V_{i+2}-V_o$ sont simultanément appliquées. Une différence de potentiel $V_{i+6}-V_o$ peut être utilement appliquée pour forcer le globule 13 à rester en place. On peut également produire des déplacements en sens contraires des globules 12 et 13 en jouant sur les différences de potentiel appliquées. Si ces globules viennent à se télescoper, ils peuvent se fondre en un seul.

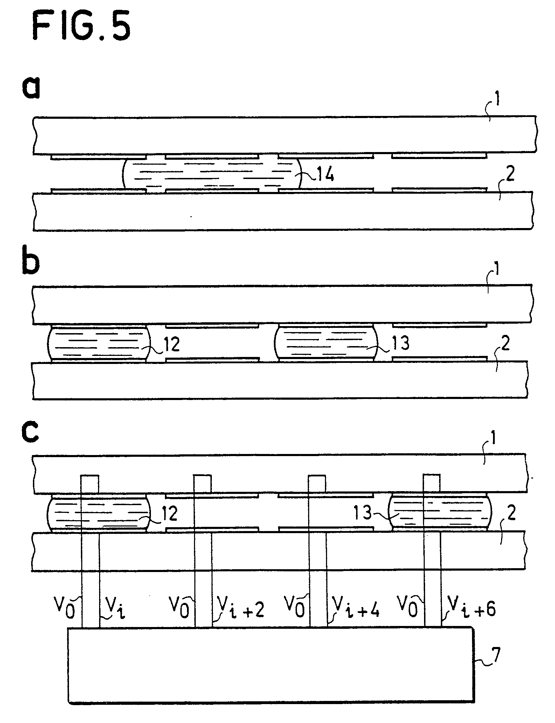

Inversement, l'art connu prévoit également de fractionner un globule comme illustré sur la figure 5.

La disposition de départ illustrée en (a) sur la figure 5 montre un globule 14 qui est centré sur le second couple d'électrodes grâce à une différence de potentiel $V_{i+2}-V_o$. Le globule 14 déborde sur les couples d'électrodes voisins que peuvent également être soumis à des différences de potentiel.

Pour fractionner le globule 14 en globules élémentaires 12 et 13, on annule la différence de potentiel $V_{i+2}-V_o$ et si ce n'était déjà fait on applique les différences de potentiel $V_i-V_o$ et $V_{i+4}-V_o$. On obtient alors la situation illustrée en (b) sur la figure 5.

Pour déplacer le globule élémentaire 13 vers le droite, on annule la différece de potentiel $V_{i+4}-V_o$ et l'on établit la différence de potentiel $V_{i+6}-V_o$. On obtient ainsi la situation illustrée en (c) sur la figure 5.

Dans le processus décrit ci-dessus, pour obtenir un effet bien caractérisé, il est essentiel que le fluide soit localisé d'une part dans la région servant de réservoir, d'autre part dans les régions où on a transporté des volumes finis de ce fluide. Un étalement "spontané" excessif dans le volume délimité par les plaques 1 et 2 est préjudiciable au fontionnement du dispositif.

Selon une caractéristique de ces dispositifs, il faut choisir convenablement les fluides en présence et adopter des traitements de surface appropriés pour contrôler les tensions interfaciales fluide-solide (contact avec les parois) et fluide-fluide (contact entre fluides $f_1$ et $f_2$).

Un contrôle plus poussé de l'étalement du fluide consiste à mettre en oeuvre des électrodes créant des forces électriques volumiques pour contre-carrer l'étalement du fluide.

La mise en oeuvre de forces électriques volumiques de rappel permet de gérer avec précision la formation de globules de calibre déterminé à partir d'une réserve de fluide.

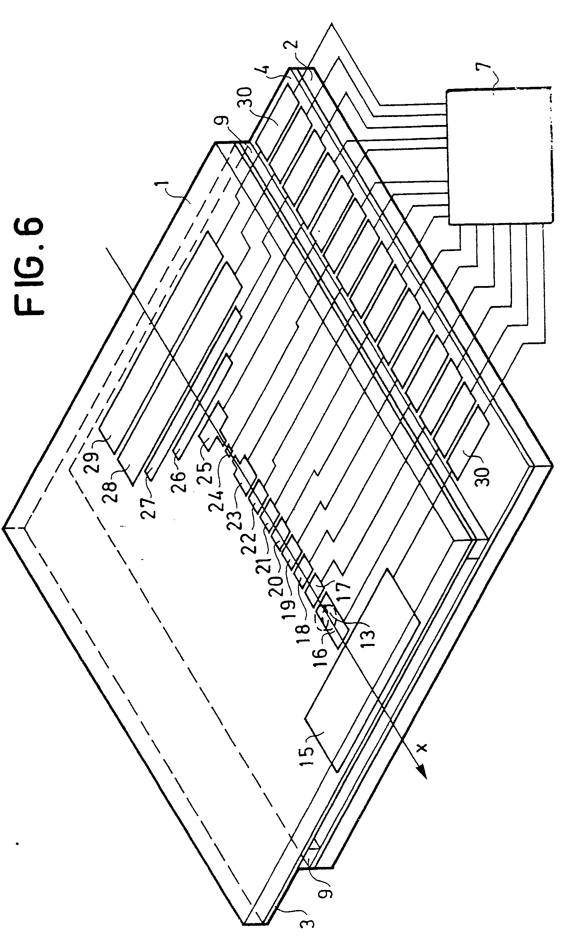

La figure 6, représente un exemple de réalisation, selon l'invention, d'un dispositif de commande électrique de déplacement d'un fluide permettant d'extraire, d'une région réservoir, une fraction calibrée de volume de fluide.

Sur la figure 6, on peut voir une vue isométrique d'une dispositif indicateur permettant de calibrer le volume de fluide des index que l'on souhaite déplacer de proche en proche. Ce dispositif comporte deux plaques de verre 1 et 2 munies sur leurs faces en regard d'électrodes. Afin de ne pas surcharger le dessin, seules les électrodes 15 à 29 portées par la plaque inférieure 2 sont représentées, mais ces électrodes définissent des cellules de condensateur avec un second jeu ou une contre-électrode unique porté par la plaque 1. Des entretoises 9 définissent avec les plaques 1 et 2 un espace capillaire partiellement rempli d'un liquide $f_2$; le reste du volume de cet espace contient de l'air, afin de jouer le rôle du fluide $f_1$. La majeure partie du liquide $f_2$ est contenue dans les régions périphériques où sont présentes les plus grandés électrodes 15 et 16 et 26 à 29. Une petite fraction de liquide $f_2$ est représentée en cours de progression selon l'axe x; il s'agit d'un globule 13 logé entre les plaques 1 et 2. L'alimentation électrique des électrodes 15 à 29 est assurée par un générateur électrique 7 qui fournit à des instants appropriés des différences de potentiel destinées à engendrer le fractionnement d'un globule pour l'injecter dans une ligne de déplacement ou pour le faire progresser selon cette ligne. Pour faciliter les connexions, chaque plaque 1 ou 2 comporte un peigne 30 dont les plots sont un à un reliés par des connexions fines aux électrodes 15 à 29. Chaque plaque 1 ou 2 munie de ses plages électriquement conductrices est revêtue sur sa face interne de dépôts minces 3 et 4 destinés à empêcher le liquide de se répandre dans toute la cavité située entre elles. Ce dépôt est tel que le liquide $f_2$ ne mouille pas les surfaces de confinement.

A titre d'exemple non limitatif, les plaques de verre 1 et 2 sont des lames planes carrées de côté 5 cm et d'épaisseur 1,5 mm; les cales d'épaisseur 9 sont découpées dans un film en polymère de 24 microns d'épaisseur, par exemple un film de "Mylar" ou de "Kapton", marques déposées de la firme Du Pont De Nemours.

Avant assemblage, ces lames de verre sont équipées de leurs électrodes déposées selon les techniques de microlithographie. Les électrodes 15 à 29 sont constituées de dépôts d'oxyde indium et d'étain, par exemple du type Baltracon, commercialisé par la société Balzers. Un recuit à 350°C permet de les rendre transparentes à la lumière. La configuration des électrodes sur la figure 6 a été simplifiée, mais on peut distinguer une région formant réserve de liquide composée d'électrodes en larges bandes 26 à 29 de 0,5 à 4 mm de largeur et de 2 à 30 mm de longueur. Ces électrodes sont séparées par des intervalles de faible largeur (20 µm). La région qui suit dans la direction de l'axe x réalise le fractionnement du liquide $f_2$ pour donner naissance aux globules index 13. Cette région qui rempli la fonction d'injecteur se compose d'électrodes 23 à 25 de forme carrée ou quasi-carrée ayant typiquement 0,5 mm de côté. L'électrode centrale 24 plus petite que ses voisines sert de trait d'union entre deux prolongements rétrécis des électrodes 23 et 25. La largeur de l'électrode 24 et des deux prolongements qui l'encadrent est typiquement de 100 µm. Vient ensuite la région de déplacement proprement dite. Elle est composée d'une file d'électrodes 16 à 22. Bien que non illustrée sur la figure 6, cette file d'électrodes peut en croiser d'autres permettant ainsi au globule 13 d'évoluer en tout sens sur des files qui se recoupent. La dernière région remplit une fonction de drainage. Elle se compose d'une électrode 15 plus vaste qui peut d'ailleurs être reliée à la réserve de liquide par une file d'électrodes de déplacement non illustrée sur la figure 6.

Après que les électrodes ont été déposées sur les plaques 1 et 2, les dépôts 3 et 4 sont effectués. Ce dépôts très minces ont une épaisseur de l'ordre du nm. On peut utiliser par exemple un dépôt d'organo silane, notamment d'alkylméthoxysilane, et en particulier le N,N - diméthyle - N - octadécyle - 3 - aminopropyltriméthoxysilyl chlorure. Ce dépôt a été polymérisé sous azote à 110°C après hydrolyse des groupements méthoxysilane et formation par chemisorbtion sur le substrat de liaisons hydrogène et siloxane. Du fait de la minceur de ces traitements de surface, on observe une plus grande mouillabilité là où le dépôt organique recouvre des électrodes. Cet effet est utile pour que le liquide reste confiné dans les zones à électrodes. Les polymères fluorés peuvent également constituer des surfaces de confinement non mouillantes. En ce qui concerne le liquide $f_2$, on le choisira pour que sa permittivité diélectrique soit différente de celle du fluide $f_1$. Par ailleurs, il est avantageux que le liquide à déplacer soit peu corrosif et peu conducteur de l'électricité. On a utilisé avec succés les liquides de remplissage suivants:

| liquide | permittivité | conductivité électrique $(\Omega^{-1}cm^{-1})$ |
|---|---|---|
| Cyclohexanone | 18,3 $\varepsilon_0$ | $5.10^{-18}$ |
| Nitrobenzene | 34,8 $\varepsilon_0$ | $2.10^{-10}$ |
| Hexane | 1,88 $\varepsilon_0$ | $<10^{-16}$ |

Dans le dispositif de la figure 6, les lames de verre 1 et 2 peuvent être confectionnées de façon identique et retournées de façon à mettre en superposition les configurations d'électrodes tout en laissant dépasser les peignes de connexion 30. Comme par ailleurs les zones des lames de verre non recouvertes d'électrodes ne sont pas conductrices, on évite les migrations intempestives de liquide vers le régions qui entourent les électrodes. Les connexions qui relient les électrodes aux peignes 30 sont agencées de façon à éviter tout recouvrement, ce qui atténue le champ électrique parasite produit par ces connexions.

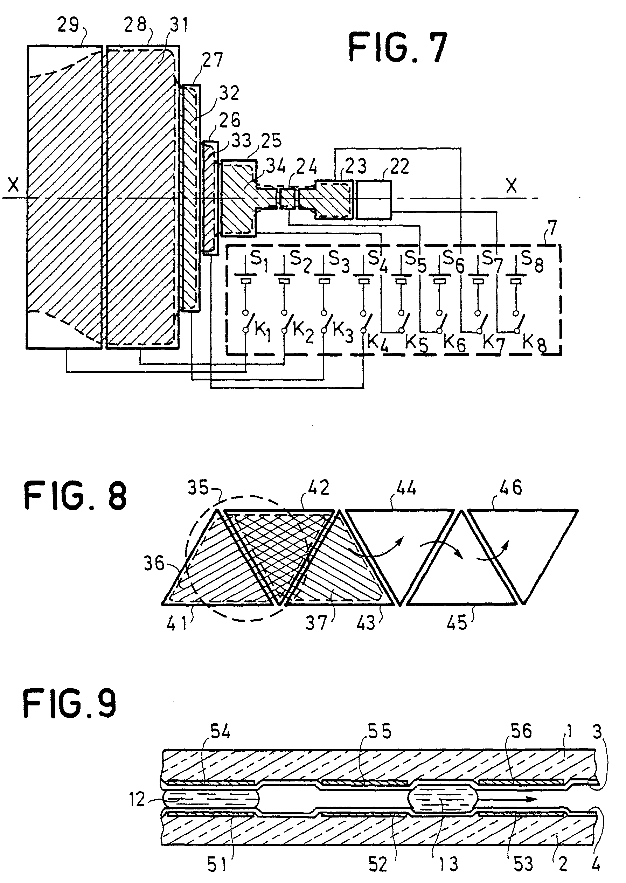

Le fonctionnement du dispositif de la figure 6 peut mieux se comprendre au moyen de la figure 7 qui reprend la disposition permettant par fractionnement de créer un index matériel en forme de globule.

Poure rendre plus aisée l'explication, on a symbolisé les moyens électriques de commande du générateur 7 par un ensemble de sources $S_1$ à $S_8$ produisant des différences de potentiel réglables et par des interrupteurs $K_1$ à $K_8$ qui contrôlent l'application des différences de potentiel. Pour la clarté du dessin, une seule série de connexions est représentée vers les éectrodes 22 à 29, alors qu'en réalité une autre série de connexions est prévue entre chaque voie du générateur 7 et les électrodes en vis-à-vis des électrodes 22 à 29. Au départ, on peut supposer qu'un volume important de liquide $f_2$ est disponible dans la réserve constituée par l'étendue des électrodes 28 et 29. Tous les interrupteurs étant ouverts l'on suppose que le liquide $f_2$ occupe la zone réservoir en accord avec les phénomènes de tension superificielle. Lorsqu'on ferme les interrupteurs $K_1$ et $K_2$, le liquide $f_2$ tend à mieux épouser le contour des électrodes 28 et 29 selon la forme hachurée portant la référence 31. En fermant l'interrupteur $K_3$, le liquide $f_2$ afflue de manière à occuper une plage supplémentaire 32 correspondant à l'étendue de l'électrode 27. En fermant l'interrupteur $K_4$, le liquide $f_2$ continue sa progression vers la droite et vient remplir la plage 33 qui correspond à l'étendue de l'électrode 26. Le liquide est ainsi mis en forme et prêt à être injecté. La fermeture des interrupteurs $K_5$, $K_6$ et $K_7$ accuse la progression vers la droite du liquide $f_2$ qui vient occuper une plage 34 qui correspond à la forme de l'ensemble des électrodes 23, 24 et 25. Cette plage présente un rétrécissement central dû aux becs de électrodes 23 et 25 et à la petite électrode de pontage 24. Si maintenant on rouvre l'interrupteur $K_6$, on provoque le fractionnement du liquide $f_2$ au niveau de l'électrode 24 sous l'effet des forces de rappel électriques et de tension superificielle. La partie de liquide à droite de l'électrode 24 est captive de l'électrode 23 et constitue un globule calibré prêt à servir d'index matériel. Le liquide restant peut refluer vers la réserve 31 en ouvrant les interrupteurs $K_3$ à $K_5$. Le globule formé face à l'électrode 23 peut entamer sa progression pas à pas en ouvrant l'interrupteur $K_7$ et en formant l'interrupteur $K_8$. Lorsqu'un index matériel en forme de globule a terminé sa progression, il peut venir s'intégrer à une réserve de liquide. Sur la figure 6, une zone de drainage est prévue dans l'étendue de l'électrode 15. On peut également faire refluer un index matériel vers sa source. Si un tel index occupe la position de l'électrode 23, on peut le faire refluer en ouvrant l'interrupteur $K_7$ et en refermant successivement les interrupteurs $K_6$, $K_5$ que l'on rouvre lorsque l'on referme $K_4$ et ainsi de suite.

On voit donc qu'avec un jeu de différences de potentiel appliquées transitoirement et décalées dans le temps, on peut générer un index matériel, le faire progresser ou régresser et finalement le renvoyer à une réserve. Le dispositif à commande de déplacement de fluide, réalisé en suivant les données et les explications de la figure 6, a permis d'effectuer jusquà 2000 déplacements élémentaires par second avec des différences de potentiel variant entre 150 et 250 volts.

Il est à noter que les forces volumiques assurant la rétention d'un liquide peuvent être dosées en faisant varier la différence de potentiel appliquée. Il faut également noter que la rétention d'un index matériel par une zone de mouillabilité plus grande permet de supprimer la différence de potentiel après qui l'index ait été attiré dans cette zone ce qui procure un effet mémoire.

Dans la description qui précède, l'espace capillaire est un volume lamellaire de hauteur uniforme. On peut, comme illustré sur la vue en coupe de la figure 9, réaliser un espace capillaire comportant des régions dans lesquelles l'écartement des surfaces de confinement est réduit. On peut par exemple utiliser comme plaques de confinement 1 et 2 des plaques en matériau moulé ou gravé dont les faces internes présentent des régions en cuvette qui entourent des bossages. Les électrodes de commande 54-51, 55-52 et 56-53 sont diposées sur les régions formant saillie. Cette disposition est avantageuse, car elle permet d'accroître les forces de rappel d'origine capillaire et à tension électrique égale d'obtenir une polarisation électrique plus importante. Ainsi, l'index matériel 12 peut être maintenu plus fermement dans l'espace interélectrode 54-51. Sur la figure 9, on a représenté un autre index matériel 13 en cours de déplacement entre l'espace interélectrode 55-52 et l'espace interélectrode 56-53.

Une autre disposition avantageuse d'électrodes est représentée sur la figure 8. Pour créer une voie de propagation d'index matériel, on a formé à partir d'un ruban conducteur découpé, une suite imbriquée d'électrodes triangulaires 41, 42, 43, 44, 45, 46. Le contour circulaire 35 représente à l'état relaxé un globule fluide. En mettant sous tension électrique les électrodes 41 et 42, le fluide du globule va tendre à occuper le contour 36 en forme de parallélogramme. Pour faire progresser le globule, on commute la tension de l'électrode 41 à électrode 43 ce qui le fait occuper le contour 37 dont la forme en parallélogramme est penchée dans l'autre sens. Après, on commute la tension électrique de l'électrode 42 à 44 et ainsi de suite. En ayant deux électrodes contigües sous tension et en effectuant les commutations indiquées, l'index matériel progresse comme le montrent les flèches incurvées.

Bien entendu, l'invention n'est pas limitée aux exemples illustrés car la forme des électrodes et leur rapprochement peuvent être adaptés à réaliser un fractionnement ou un déplacement avec la possibilité de grouper des électrodes pour définir les zones de rétention les mieux adaptées au mode de fonctionnement désiré.

# 0 124 386

Pour terminer, il est utile de donner des ordres de grandeur des divers paramètres géométriques et électriques qui peuvent s'appliquer à l'invention:

— Epaisseur entre surfaces de confinement comprises entre 1 et 100 µm
— Largeur des électrodes comprises entre 1 µm et 1 mm
— Distance interélectrodes sur une même surface de confinement 1 µm à 100 µm
— Difference de potentiel entre électrodes d'un même couple comprise entre 50 volts et 500 volts
— Champ électrique entre électrodes d'un même couple $10^6$ $Vm^{-1}$ à $10^8$ $Vm^{-1}$
— Intervalle de cadence de fonctionnement compris entre 0 et 1 MHz
— Volume d'index matériel fractionnable compris entre $10^{-10}$ et $10^{-18}$ $m^3$.

On a donc décrit dans ce qui précède un dispositif à commande électrique de déplacement de fluide dans lequel pour amener un fluide dans une région, on oppose aux forces de capillarité des forces volumiques résultant de la polarisation électrique du fluide. Ces forces volumiques sont produites par des couples d'électrodes auxquelles on applique une différence de potentiel réglable. Les formes données aux volumes contrôlés par les électrodes sont telles que lorsqu'on diminue ou supprime la différence de potentiel sur un couple d'électrode définissant une région de rétention ou de fractionnement, le fluide n'est plus dans un état d'énergie minimum, ce qui entraîne un réarrangement de la répartition de volume de fluide. Ce réarrangement peut consister en une relaxation du volume de fluide dont le périmètre d'étalement tend vers une valeur plus faible. Cette technique permet donc de réaliser la fonction d'injecteur visant à produire de façon reproductible des index fluides de volume calibré, la fonction de circulateur des index dans l'étendue d'un espace capillaire partagé par au moins deux fluides et la fonction de drainage vers un volume récepteur des index fluides qui ont terminé leur course. Il va sans dire que les tensions électriques de commande peuvent être continues ou alternatives. L'utilisation de tensions alternatives permet de mieux contrôler les phénomènes de transport ionique. L'espace capillaire du dispositif à commande électrique de déplacement de fluide est avantageusement un espace clos.

## Revendications

1. Dispositif à commande électrique de déplacement d'un fluide où celui-ci joue le rôle d'index matériel, comportant deux plaques de confinement (1, 2) délimitant un espace capillaire dont le volume est partagé par au moins deux fluides ($f_1$, $f_2$) non-miscibles de permittivités diélectriques ($\varepsilon_1$, $\varepsilon_2$) distinctes; l'un desdits fluides ($f_2$) ayant une structure globulaire noyée dans la structure lacunaire de l'autre desdits fluides ($f_1$); lesdites plaques (1, 2) étant munies de moyens inducteurs (5, 6, 7, 10, 11) d'un gradient de champ électrique faisant converger le fluide ($f_2$) ayant la plus forte permittivité ($\varepsilon_2$) vers les régions de l'espace capillaire soumises audit champ électrique, lesdits moyens inducteurs comprennant un générateur électrique (7) relié à plusieurs couples d'électrodes (5, 6, 10, 11) disposés selon les faces en vis-à-vis desdites plaques de confinement (1, 2); caractérisé en ce qu'il comporte:
— au moins une région réservoir délimitée par des couples d'électrodes (26, 27, 28, 29) et contenant une réserve de fluide;
— des couples d'électrodes de rétrécissement (23, 24, 25) situés à proximité d'un couple d'électrodes (25, 27, 28, 29) de la région réservoir et ayant une morphologie constituant un rétrécissement permettant de former par convergence du fluide ($f_2$) la striction de son volume en vue de le fractionner; lesdits couples d'électrodes (23, 24, 25) coopérant avec ledit générateur électrique (7) pour fractionner ledit volume et extraire de la région réservoir une fraction calibrée de volume de fluide.

2. Dispositif selon la revendication 1, caractérisé en ce que des couples d'électrodes (16 à 22) sont agencés à la suite dudit rétrécissement selon au moins une file afin d'assurer de déplacement d'au moins un index matériel (13) constitué par un volume dudit fluide ($f_2$) à structure globulaire.

3. Dispositif selon la revendication 1, caractérisé en ce que les couples d'électrodes de rétrécissement (23, 25) sont situés de part et d'autre d'un couple d'électrodes de partage (24) possédant tous des dimensions réduites par rapport aux couples d'électrodes voisins (22, 26), ce qui permet d'extraire de ladite région réservoir les volumes calibrés de fluide ($f_2$).

4. Dispositif selon la revendication 1, caractérisé en ce que les couples d'électrodes de rétrécissement (23, 25) présentent chacun un profil réduit au voisinage du couple d'électrodes de partage (24) et que les dimensions du couple d'électrodes de pontage (24) correspondant audit profil réduit des électrodes de rétrécissement (23, 25).

5. Dispositif selon la revendication 1, caractérisé en ce que lesdites électrodes ont une forme triangulaire et sont agencées pour former une suite imbriquée; deux électrodes contigües étant mises sous tension à chaque étape de progression dudit index matériel.

6. Dispositif selon l'une quelconque des revendications précédentes, caractérisé en ce que les faces internes desdites plaques de confinement (1, 2) sont revêtues de dépôts (3, 4) destinés à réduire la mouillabilité des surfaces délimitant ledit espace capillaire.

7. Dispositif selon la revendication 6, caractérisé en ce que lesdits dépôts (3, 4) sont d'une minceur telle que des électrodes (5, 6) recouvertes par ces dépôts exercent via ceux-ci une action rétensive sur le fluide ($f_2$) à déplacer.

8. Dispositif selon l'une quelconque des revendications 1 à 5, caractérisé en ce que ledit espace capillaire est délimité par deux surface lisses équidistantes.

7

9. Dispositif selon l'une quelconque des revendications 1 à 5, caractérisé en ce que ledit espace capillaire est délimité par deux surfaces; l'une au moins desdites surfaces présentant des creux et des saillies.

10. Dispositif selon la revendication 1, caractérisé en ce que ledit espace capillaire comporte au moins une région de drainage (15) collectant lesdits volumes calibrés de fluide (f₂).

11. Dispositif selon l'une quelconque des revendications précédentes, caractérisé en ce que le fluide (f₂) ayant ladite structure globulaire est un liquide.

12. Dispositif selon la revendication 11, dans lequel le fluide (f₁) ayant ladite structure lacunaire est un gaz ou une vapeur.

13. Dispositif selon l'une quelconque des revendications précédentes, caractérisé en ce que ledit espace capillaire est un espace clos.

14. Dispositif selon l'une quelconque des revendications précédentes, caractérisé en ce que l'une au moins desdites plaques (1, 2) est faite d'un matériau perméable au rayonnement optique.

15. Dispositif selon la revendication 1, caractérisé en ce que ledit index matériel se présente sous la forme d'un globule fluide ayant un volume tel qu'il soit pincé par lesdites plaques de confinement (1, 2).

16. Dispositif selon la revendication 1, caractérisé en ce que lesdits couples d'électrodes (5, 6, 10, 11) sont constitués par des dépôts d'un matériau électriquement conducteur perméable au rayonnement optique.

17. Dispositif selon la revendication 1, caractérisé en ce que lesdits moyens inducteurs (5, 6, 7) comprennent des électrodes (5, 6) en oxyde d'indium et d'étain.

18. Dispositif selon la revendication 17, caractérisé en ce que les électrodes (5, 6) sont recouvertes par un dépôt de N,N - diméthyle - N - octadécyle-3-aminopropyltriméthoxysilyl chlorure.

19. Dispositif selon l'une quelconque des revendications 17 ou 18, caractérisé en ce que le fluide (f₂) ayant la plus forte permittivité diélectrique est la cyclohexanone, le nitrobenzène ou l'hexane.

20. Dispositif selon l'une quelconque des revendications précédentes, caractérisé en ce que l'index matériel est détecté dans l'espace capillaire par un moyen basé sur la variation de capacité électrique résultant des permittivités électrique distinctes desdits fluides (f₁, f₂).

## Patentansprüche

1. Vorrichtung mit elektrischer Steuerung der Bewegung eines Fluids, worin dieses die Funktion eines materiellen Anzeigers aufweist, mit zwei Begrenzungsplatten (1, 2), die einen Kapillarraum begrenzen, dessen Volumen von wenigstens zwei Fluiden (f₁, f₂) geteilt wird, die nicht mischbar sind und verschiedene Dielektrizitätskonstanten (ε₁, ε₂) aufweisen; wobei eines dieser Fluide (f₂) eine Kugelstruktur aufweist, welche in die Lückenstruktur des anderen Fluids (f₁) engebettet ist; wobei die genannten Platten (1, 2) mit Einrichtungen (5, 6, 7, 10, 11) zum Induzieren eines elektrischen Feldgradienten versehen sind, der eine Konvergenz des Fluids (f₂) mit der größten Dielektrizitätskonstante (ε₂) zu den Gebieten des Kapillarraumes bewirkt, welche dem elektrischen Feld ausgesetzt sind, wobei die induzierenden Einrichtungen einen elektrischen Generator (7) umfassen, der an mehrere Elektrodenpaare (5, 6, 10, 11) angeschlossen ist, welche entlang einander gegenüberliegenden Flächen der genannten Begrenzungsplatten (1, 2) angeordnet sind; dadurch gekennzeichnet, daß die enthält:
— wenigstens ein Reservoirgebiet, das durch Elektrodenpaare (26, 27, 28, 29) begrenzt ist und einen Fluidvorrat enthält;
— Verengungs-Elektrodenpaare (23, 24, 25), die in der Nähe eines Elektrodenpaares (25, 27, 28, 29) des Reservoirgebietes liegen und eine Beschaffenheit aufweisen, durch welche eine Verengung gebildet wird, die es ermöglicht, die Verengung seines Volumens durch Konvergenz des Fluids (f₂) zum Aufbrechen dieses Volumens zu bilden; wobei die genannten Elektrodenpaare (23, 24, 25) mit dem elektrischen Generator (7) zusammenwirken, um das genannte Volumen aufzubrechen und aus dem Reservoirgebiet einen kalibrierten Bruchteil des Fluidvolumens abzuziehen.

2. Vorrichtung nach Anspruch 1, dadurch gekennzeichnet, daß die Elektrodenpaare (16 bis 22) anschließend an die genannte Verengung in wenigstens einer Reihe angeordnet sind, um die Bewegung wenigstens eines materiellen Anzeigers (13) zu gewährleisten, welcher durch ein Volumen des genannten Fluids (f₂) mit kugelförmiger Struktur gebildet ist.

3. Vorrichtung nach Anspruch 1, dadurch gekennzeichet, daß die Paare von Verengungselektroden (23, 25) beiderseits eines Paares von Teilungselektroden (24) gelegen sind, wovon alle Abmessungen aufweisen, die klein gegenüber den benachbarten Elektrodenpaaren (22, 26) sind, wodurch es ermöglicht wird, aus dem genannten Reservoirgebiet die kalibrierten Fluidvolumina (f₂) abzuziehen.

4. Vorrichtung nach Anspruch 1, dadurch gekennzeichnet, daß die Paare von Verengungselektroden (23, 25) jeweils ein Profil aufweisen, das in der Nähe des Teilungselektrodenpaares (24) verjüngt ist, und daß die Abmessungen des Überbrückingselekgrodenpaares (24) dem genannten verjüngten Profil der Verengungselektroden (23, 25) entsprechen.

5. Vorrichtung nach Anspruch 1, dadurch gekennzeichnet, daß die genannten Elektroden Dreieckform aufweisen und so angeordnet sind, daß sie eine verschaltete Folge bilden; wobei zwei aneinander angrenzende Elektroden in jeder Stufe des Fortschreitens des materiellen Anzeigers unter Spannung gesetzt werden.

6. Vorrichtung nach einem der vorstehenden Ansprüche, dadurch gekennzeichnet, daß die Innenflächen der genannten Begrenzungsplatten (1, 2) mit Ablagerungen (3, 4) beschichtet sind, welche dazu bestimmt sind, die Benetzbarkeit der Oberflächen zu vermindern, welche den genannten Kapillarraum begrenzen.

7. Vorrichtung nach Anspruch 6, dadurch gekennzeichnet, daß die genannten Ablagerungen (3, 4) so dünn sind, daß die von diesen Ablagerungen bedeckten Elektroden (5, 6) über letztere eine Haltewirkung auf das zu bewegende Fluid ($f_2$) ausüben.

8. Vorrichtung nach einem der Ansprüche 1 bis 5, dadurch gekennzeichnet, daß der Kapillarraum durch zwei äquidistante glatte Oberflächen begrenzt ist.

9. Vorrichtung nach einem der Ansprüche 1 bis 5, dadurch gekennzeichnet, daß der Kapillarraum durch zwei Oberflächen begrenzt ist: wobei wenigstens eine dieser Oberflächen Hohlräume und Vorsprünge aufweist.

10. Vorrichtung nach Anspruch 1, dadurch gekennzeichnet, daß der Kapillarraum wenigstens ein Ablaufgebiet (15) umfaßt, welches die genannten kalibrierten Fluidvolumina ($f_2$) aufsammelt.

11. Vorrichtung nach einem der vorstehenden Ansprüche, dadurch gekennzeichnet, daß das Fluid ($f_2$), welches die kugelförmige Struktur aufweist, eine Flüssigkeit ist.

12. Vorrichtung nach Anspruch 11, worin das die genannte Lückenstruktur aufweisende Fluid ($f_1$) ein Gas oder Dampf ist.

13. Vorrichtung nach einem der vorstehenden Ansprüche, dadurch gekennzeichnet, daß der genannte Kapillarraum ein geschlossener Raum ist.

14. Vorrichtung nach einem der vorstehenden Ansprüche, dadurch gekennzeichnet, daß wenigstens eine der Platten (1, 2) aus einem Material gebildet ist, das für optische strahlung durch lässig ist.

15. Vorrichtung nach Anspruch 1, dadurch gekennzeichnet, daß der genannte Materielle Anzeiger die Form einer Fluidkugel aufweist, die ein solches Volumen aufweist, daß sie durch die genannten Begrenzungsplatten (1, 2) eingespannt wird.

16. Vorrichtung nach Anspruch 1, dadurch gekennzeichnet, daß die Elektrodenpaare (5, 6, 10, 11) durch Ablagerungen eines elektrisch leitfähigen Materials gebildet sind, das für optische Strahlung durchlässig ist.

17. Vorrichtung nach Anspruch 1, dadurch gekennzeichnet, daß die genannten Indiziereinrichtungen (5, 6, 7) Elektroden (5, 6) aus Indium- und Zinnoxid umfassen.

18. Vorrichtung nach Anspruch 17, dadurch gekennzeichnet, daß die Elektroden (5, 6) durch eine Ablagerung aus N,N - Dimethyl - N - octadecyl - 3 - aminopropyltrimethoxysilyl - Chlorid bedeckt sind.

19. Vorrichtung nach einem der Ansprüche 17 oder 18, dadurch gekennzeichnet, daß das Fluid ($f_2$), welches die größere Dielektrizitätskonstante aufweist, Cyclohexanon, Nitrobenzol oder Hexan ist.

20. Vorrichtung nach einem der vorstehenden Ansprüche, dadurch gekennzeichnet, daß der materielle Anzeiger in dem Kapillarraum durch eine Einrichtung detektiert wird, welche auf der Änderung der elektrischen Kapazität beruht, welche aus den verschiedenen Dielektrizitätskonstanten der Fluide ($f_1$, $f_2$) resultiert.

## Claims

1. Device for electrically controlling the movement of a fluid wherein the latter has the function of a material index, comprising two confining plates (1, 2) defining a capillary space the volume of which is shared by at least two unmixable fluids ($f_1$, $f_2$) of different dielectric permittivities ($\varepsilon_1$, $\varepsilon_2$); one of said fluids ($f_2$) having a globular structure embedded in the lacunary structure of the other of said fluids ($f_1$); said plates (1, 2) being provided with means (5, 6, 7, 10, 11) for inducing an electric field gradient causing the fluid ($f_2$) having the highest permittivity ($\varepsilon_2$) to converge towards the regions of the capillary space exposed to said electric field, said inducing means comprising an electric generator (7) connected to a plurality of electrode couples (5, 6, 10, 11) arranged along the facing surfaces of the confinement plates (1, 2); characterized in that it comprises:
— at least one container region defined by electrode couples (26, 27, 28, 29) and containing a fluid reserve;
— narrowing electrode couples (23, 24, 25) located near to an electrode couple (25, 27, 28, 29) of the container region and having a morphology forming a narrowing permitting to form by convergence of the fluid ($f_2$) the constriction of its volume to divide it into fractions; said electrode couples (23, 24, 25) cooperating with said electric generator (7) for dividing said volume into fractions and extracting a calibrated fraction of the fluid volume from the container region.

2. Device according to claim 1, characterized in that the electrode couples (16 to 22) are arranged following said narrowing along at least one row in order to ensure the movement of at least one material index (13) formed by a volume of said fluid ($f_2$) having a globular structure.

3. Device according to claim 1, characterized in that the narrowing electrode couples (23, 25) are located on both sides of a dividing electrode couple (24), all of them having reduced dimensions compared to the adjacent electrode couples (22, 26), which permit to extract the calibrated fluid ($f_2$) volumina from the container region.

4. Device according to claim 1, characterized in that the narrowing electrode couples (23, 25) each have a reduced profile in the neighbourhood of the dividing electrode couple (24) and that the dimensions of the bridging electrode couple (24) correspond to said reduced profile of the narrowing electrodes (23, 25).

5. Device according to claim 1, characterized in that said electrodes having a triangular shape and are arranged to form an imbricated sequence; two contiguous electrodes being connected to a voltage at each stage of progression of the material index.

6. Device according to any of the preceding claims, characterized in that the inner faces of said confinement plates (1, 2) are covered with deposits (3, 4) for reducing the wettability of the surfaces defining said capillary space.

7. Device according to claim 6, characterized in that said deposits (3, 4) are sufficiently thin so that the electrodes (5, 6) covered by these deposits develop through the latter a retaining action for the fluid $(f_2)$ to be moved.

8. Device according to any of claims 1 to 5, characterized in that said capillary space is defined by two smooth equally spaced surfaces.

9. Device according to any of claims 1 to 5, characterized in that said capillary space is defined by two surfaces: one at least of said surfaces having cavities and projections.

10. Device according to claim 1, characterized in that said capillary space comprises at least one draining region (15) collecting said calibrated fluid $(f_2)$ volumina.

11. Device according to any of the preceding claims, characterized in that the fluid $(f_2)$ having the globular structure is a liquid.

12. Device according to claim 11, wherein the fluid $(f_1)$ having said lacunary structure is a gas or a vapor.

13. Device according to any of the preceding claims, characterized in that said capillary space is a closed space.

14. Device according to any of the preceding claims, characterized in that at least one of said plates (1, 2) is made of a material which is transparent to the optical radiation.

15. Device according to claim 1, characterized in that said material index has the shape of a fluid globule of a volume which is such that it is pinched by said confinement plates (1, 2).

16. Device according to claim 1, characterized in that said electrode couples (5, 6, 10, 11) are formed by deposits of an electrically conductive material which is transparent to the optical radiation.

17. Device according to claim 1, characterized in that said inducing means (5, 6, 7) comprise electrodes (5, 6) of indium and tin oxide.

18. Device according to claim 17, characterized in that said electrodes (5, 6) are covered with a deposit of N,N - dimethyl - N - octadecyl - 3 - aminopropyltrimethoxysilyl chloride.

19. Device according to any of claims 17 or 18, characterized in that the fluid $(f_2)$ having the highest dielectric permittivity is cyclohexanone, nitrobenzene or hexane.

20. Device according to any of the preceding claims, characterized in that the material index is detected in the capillary space by means based on the variation of electric capacity resulting from the different electric permittivities of said fluids $(f_1, f_2)$.

FIG.1

FIG.2

FIG. 3

# FIG.4

a

b

c

$V_0$  $V_i$    $V_0$  $V_{i+2}$    $V_0$  $V_{i+4}$    $V_0$  $V_{i+6}$

# FIG.5

a

b

c

$V_0$  $V_i$  $V_0$  $V_{i+2}$  $V_0$  $V_{i+4}$  $V_0$  $V_{i+6}$

# FIG.6

0 124 386

# FIG. 7

# FIG. 8

# FIG. 9